Europäisches Patentamt

European Patent Office

Office européen des brevets

(19)

(11) Veröffentlichungsnummer: **0 328 730**
**A2**

(12) **EUROPÄISCHE PATENTANMELDUNG**

(21) Anmeldenummer: 88114659.1

(22) Anmeldetag: 08.09.88

(51) Int. Cl.4: **G01P 7/00**

(30) Priorität: 09.02.88 DE 3803872

(43) Veröffentlichungstag der Anmeldung:
23.08.89 Patentblatt 89/34

(84) Benannte Vertragsstaaten:
DE FR GB SE

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Berresheim, Alexander**
**Kuckucksweg 2**
**D-8011 Brunnthal(DE)**

(54) **Einrichtung zur inertialen Geschwindigkeits- oder Beschleunigungsmessung und Schaltungsanordnung zur Signalaufbereitung und -verarbeitung hierfür.**

(57) Eine Einrichtung zur inertialen Geschwindigkeits- oder Beschleunigungsmessung weist eine Schaltungsanordnung zur Aufbereitung und -verarbeitung von Meßsignalen auf, bei der diese Signale von Meßfühlern/Sensoren als Geber direkt in eine digitale Form gebracht und aufintegriert werden als Summen (S) von Produkten (P = X $\cdot$ V). Durch die A/D-Wandlung am Anfang der Schaltung fallen Fehlerquellen einer analogen Verarbeitungsschaltung und deren Aufwand fort. Ein Rechner ist nicht notwendig.

FIG. 1

EP 0 328 730 A2

## Einrichtung zur inertialen Geschwindigkeits- oder Beschleunigungsmessung und Schaltungsanordnung zur Signalaufbereitung und -verarbeitung hierfür

Die Erfindung betrifft eine Einrichtung zur inertialen Geschwindigkeits- oder Beschleunigungsmessung gemäß dem Oberbegriff des Patentanspruchs 1.

In Inertial-Systemen zur Geschwindigkeits- oder Beschleunigungsmessung wurden meist Kreisel (seismische Masse) als Meßfühler bzw. Sensoren verwendet, die eine Winkelmessung und eine Integration der Meßsignale erfordern. Ähnliches gilt bei den bekannten Sensoren für ABS = Antiblockiersystem und für ASR = Antischlupfregelung (induktive oder photoelektrische Sensoren).

Zur Signalaufbereitung wird dabei meistens eine Analogschaltung benutzt, bei der ein Kondensator aufgeladen wird, dessen Ladespannung proportional zum Integral des Ladestroms ist. Hierbei gehen die Ladestromtoleranz, die Drift und Offset von Verstärker und Kondensator direkt in die Genauigkeit der Integration ein. d.h. sie wirken sich negativ hierauf aus. Die Auflösung wird durch Schwierigkeiten bestimmt, die bei der Verarbeitung von Kleinsignalen auftreten.

Aufgabe der Erfindung ist es die möglichen Fehlerquellen einer Schaltung zur analogen Signalzubereitung und -verarbeitung bei inertialen Meßsystemen auszuschalten.

Gelöst wird diese Aufgabe bei einer Schaltungsanordnung für eine Einrichtung der eingangs genannten Art durch die in Anspruch 1 angegebenen Merkmale. Gestaltungen und Ausführungen der Erfindung sind ferner weiteren Ansprüchen sowie der Beschreibung und Zeichnung eines Ausführungsbeispiels zu entnehmen.

Die wesentlichsten Vorteile der Erfindung gegenüber der eingangs beschriebenen bekannten Schaltungsanordnung mit Ladekondensator in Analogschaltung sind:

- Hohe Genauigkeit, hohe Nullpunktstabilität, hohe Linearität, hohe Langzeitstabilität, hohe Ausflösung.

Außerdem:

- Einfache und vielseitige Adaptionsmöglichkeiten softwareseitig, ohne daß weitere Schaltelemente oder deren Verdrahtung nötig wäre.

Dadurch, daß bei den Initial-Sensoren ein direkter digitaler Abgriff erfolgt und die A/D-Wandlung nicht am Schluß der Signalaufbereitung folgt, sondern am Anfang steht, fallen auch die restlichen Fehler bei der Analogumsetzung der Signale fort.

Ferner kann durch die erfindungsgemäß vorgesehene direkte Parallelverarbeitung der Signale hoher Rechneraufwand - mit Prozessor und notwendiger Peripherie - vermieden werden.

Es zeigen:

Fig. 1 ein Prinzipschaltbild der Signalaufbereitung;

Fig. 2 ein Blockschaltbild vom Analog-Eingang zum Digital-Ausgang;

Fig. 3 eine Schaltungseinzelheit für die Referenz/Zeittakt/Generierung;

Fig. 4 eine Abgleichhilfe im einzelnen;

Fig. 5 eine Signal-Wandlung für Analog-Ausgang;

Fig. 6 eine Codeanpassung im einzelnen.

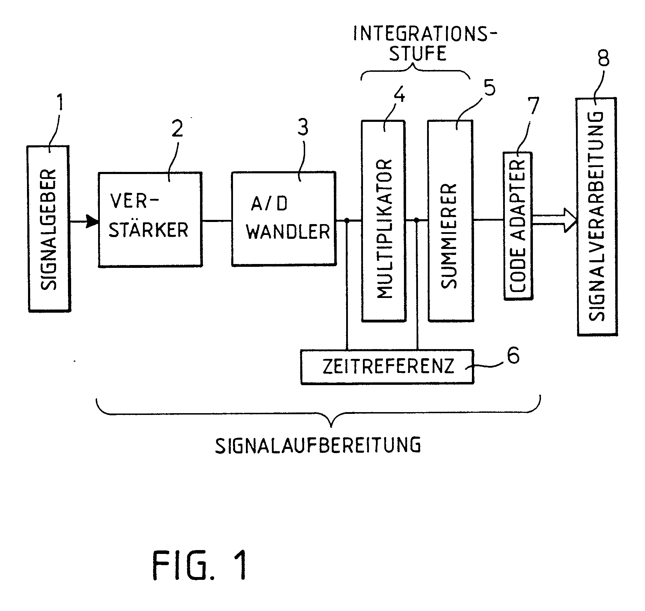

Die Erfindung ist nachstehend anhand eines Ausführungsbeispiels erläutert. Ihr Prinzip ist besonders deutlich in Fig. 1 veranschaulicht. Signalgeber 1 geben insbesondere von Sensoren erfaßte Meßwerte, wie Geschwindigkeit 'v', Beschleunigung 'g' als elektrische Signale ab an eine Signalaufbereitungsschaltung. In dieser werden die am Eingang anliegenden Signale zunächst vorverstärkt im Verstärker 2 und Wandler 3. Die nunmehr in digitaler Form vorliegenden Signale werden sodann einer Integrationsstufe, bestehend aus Multiplikator 4 und Summierer 5, zugeführt. Mit den Gliedern 3, 4 und 5 des Blockes ist eine Zeitreferenz 6 als weiterer Geber verbunden, die von einem Taktgenerator gespeist wird. In dem Multiplikator und Summierer werden die Faktoren X und Y zu einem Produkt P verarbeitet. Das Ergebnis P einer Multiplikation wird zum Ergebnis P der darauffolgenden Multiplikation hinzuaddiert (Registerakkumulation). Das Akkumulationsergebnis über der Zeit läßt sich dann wie folgt beschreiben:

| P(tO) | = | X(tO) | * | Y(tO) | + | O |
|-------|---|-------|---|-------|---|-------|
| P(tO) | = | X(tO) | * | Y(t1) | + | P(tO) |
| P(t2) | = | X(t2) | * | Y(t2) | + | P(t1) |
| ..... |   | ..... |   | ..... |   | ..... |
| P(tn) | = | X(tn) | * | Y(tn) | + | P(tn-1) |

Hierin ist t die Zeit, aufgelöst in gleigroße Schritte. Wählt man Y = const., z.B. gleich 1, so bildet P die zeitabhängige Summe von X. Die Signalaufbereitung endet dann mit einer Codeanpassung in Glied 7 für eine folgende weitere Signalverarbeitung/-verwendung in Glied 8.

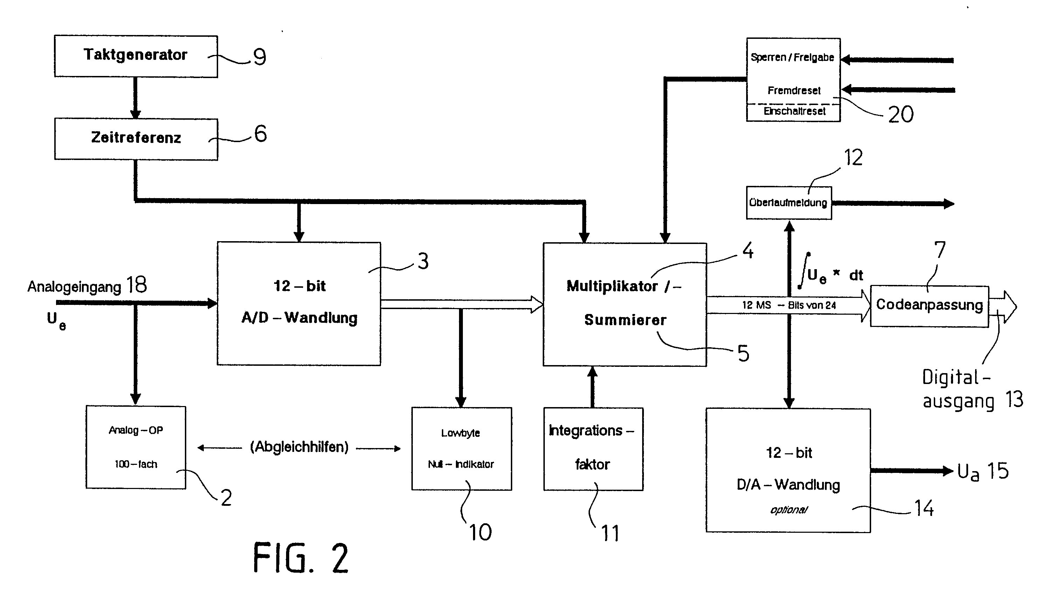

In Fig. 2 sind gleiche Teile mit gleichen Bezugszeichen versehen. Der Taktgenerator 9 speist die Zeitreferenz 6. Der Eingang vom Signalgeber 1 ist analog ausgeführt für eine Eingangsspannung $U_e$ und verbunden mit einem Analog-Operationsverstärker 2 (für 100fache Verstärkung). Der A/D-Wandler 3 kann z.B. 12 Bit breite Zahlen verarbeiten. Mit ihm kann mit Vorteil ein Lowbyte-Null-Steller bzw. Nullstellungsindikator 10 verbunden sein. Die Glieder 2 und 10 bilden zusammen eine Abgleichhilfe. Der A/D-Wandler 3 ist mit dem Multiplikator/Summierer 4/5 verbunden. Diesem kann von einem weiteren Geber 11 ein Integrationsfaktor zugeführt werden. Je nach Anwendung kann auch ein Vorzeichen-Inverter angeschlossen werden. Bei Ergebnisüberlauf der Produktensumme erfolgt Meldung durch Glied 12. Die aufbereiteten Signale, die zur Weiterverarbeitung am Digitalausgang anstehen. z.B. nur 12 von 24 Bits - die restlichen 12 sind unterdrückt, weil unerwünscht oder zu klein - werden einem Glied 7 zur Codeanpassung zugeführt, falls die Weiterverarbeitung in Glied 8 digital erfolgen soll.

Alternativ kann jedoch auch eine Signalausgabe, bei 15, analog erfolgen, z.B. in Form einer Spannung $U_a$, die von einem (12 Bit) D/A-Wandler 14 erzeugt (rück-umgewandelt) wird.

Nicht dargestellt wurde der Einfachheit wegen eine auch hier notwendige übliche Stromversorgung von einer (Klein-)Spannungsquelle.

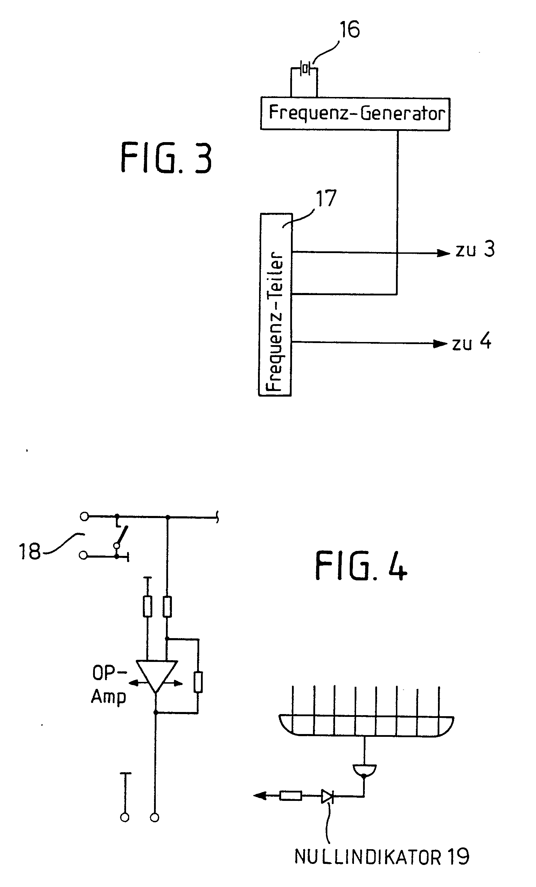

In Fig. 3 ist die Einzelheit 'Zeitreferenz' 6 näher ausgearbeitet. Ein Frequenz- oder Taktgenerator 9 ist mit einem Schwingquarz 16 ausgestattet, der als Zeitgeber dient. Mit Glied 9 ist ein Frequenzteiler 17 und dieser mit einem Starteingang des A/D-Wandlers 3 verbunden.

Mit dem Analog-Eingang 18 ist der Operationsverstärker 2 verbunden und dieser als Abgleichhilfe mit dem Nullindikator 10, wobei letzterer eine Leuchtanzeigediode LED 19 aufweist zwecks Nullstellungsanzeige (vgl. Fig. 4). Ein LED kann auch als Betriebsanzeige dienen.

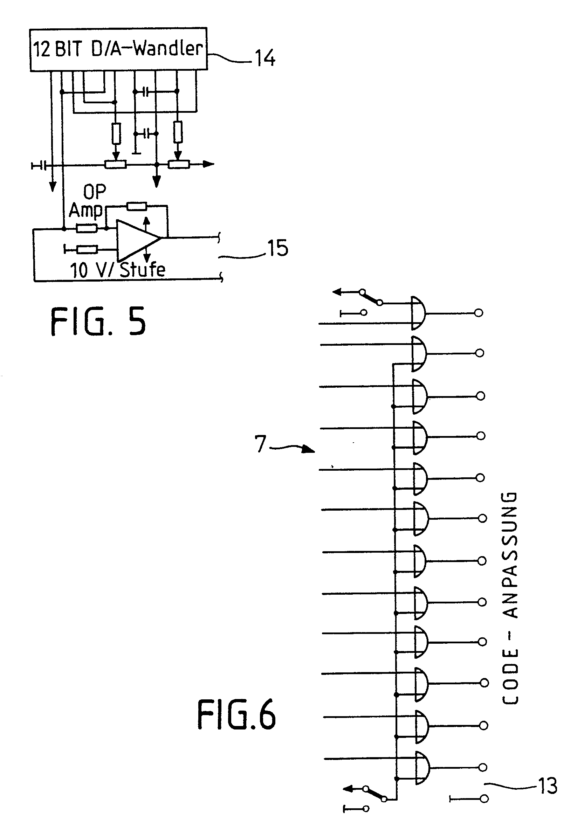

Wie wiederum aus Fig. 2 ersichtlich, sind sowohl die Zeitreferenz 6 als auch der A/D-Wandler 3 mit seinen Abgleichhilfen 2 und 10 als auch ein Integrations-Faktorgeber 11 und eine Rückstelleinheit 20 mit dem Multiplikator/Summierer 4/5 verbunden. Die Rückstelleinheit dient u.a. dem Rücksetzen auf Einschalten als auch dem Sperren bzw. der Freigabe von Signalen zu den vorgesehenen Ausgängen: analog, in Fig. 5 und digital über Code-Anpassung 7 an die Weiterverarbeitung 8, in Fig. 6.

Arbeitsweise der Schaltung gemäß Ausführungsbeispiel:

Das Eingangssignal X (Winkelgeschwindigkeit) vom Sensor wird in einem A/D-Wandler mit 12 Bit Breite gebildet. Die Konstanz der Referenzspannung ist für die Wandlungsgenauigkeit im Wandler 3 von Bedeutung. Die Genauigkeit der Ansteuerfrequenz, die mit einem Quarz und anschließender Teilung erzeugt wird, ist von untergeordneter Bedeutung. Die anderen Einflüsse, die die Genauigkeit einer Analogschaltung beeinträchtigen könnten, fallen bei der anschließenden digitalen Integration fort. Das auf 12 Bit gewandelte Analogsignal steht am Multiplikationsbaustein 4 im 'Offset-Binary-Code' an, um den für eine Integration notwendigen Polaritätswechsel zu erreichen. Zum Rücksetzen und Starten des Integrators wird das Produktregister P mit dem Wert 0 geladen (P(t0-1) = 0).

Den Taktgenerator 9 bildet ein Quarz von 3,2768 MHz Ansteuerfrequenz. Im Teiler 9 wird die Frequenz auf 800 Hz heruntergeteilt. Diese steuert sowohl den A/D-Wandler als auch den Multiplikationsbaustein. Der Zeitschritt für die Integration beträgt somit 1,25 ms. Zum Abgleich der analogen Signalspannungsquelle wird ein Operationsverstärker OP verwendet. Ein 8-fach-OR-Gatter mit nachgeschalteter Leuchtdiode 3 erleichtert den Nullabgleich des D/A-Wandlers. Die 27 Ausgänge des Produktregisters P sind mit Pull-Down-Widerständen belastet, die beim Rücksetzen des Bausteins den Wert 0 vorgeben. Aus Skalierungsgründen werden die unteren 12 Bit des Produktregisters unterdrückt. Das Ausgangssignal wird durch die nach oben folgenden 12 Bit gebildet, was eine Auflösung von +/- 2048 Schritten bedeutet. Dieser Ausgangsbereich, der im vorliegenden Fall einem Winkel entspricht, kann durch eine entsprechende Skalierung des Wertes Y oder des Frequenzteilers beliebig variiert werden. Da sowohl der Faktor Y als auch der Frequenzteiler als binäre Werte eingegeben werden können, ist eine Adaption der Integration in Abhängigkeit von anderen Eingangssignalen möglich. Das ist für adaptive Regelsysteme von Bedeutung. Die 12 Gatter bei Glied 7 dienen der wahlweisen Anpassung des Signalcodes an

3

Folgeschaltungen/Weiterverarbeitungen 8: Positive/Negative Logik, Offset/True-Binary BCD. Diverse Bausteine des Schaltbildes dienen der Steuerung und Überwachung des Integrators, wie Rücksetzen, Nullen, Ein- Ausschalten und Überlaufkontrolle. Soll das integrierte digitale Winkelsignal analog weiterverarbeitet werden, so kann dieses mit einem geeigneten D/A-Wandler mit folgender OP-Verstärkerstufe umgesetzt werden. Im forliegenden Fall wurde hier - jedoch für meßtechnische Zwecke - so verfahren.


## Ansprüche

1. Einrichtung zur inertialen Geschwindigkeits- oder Beschleunigungsmessung, insbesondere für Navigationszwecke, mit Meßfühler oder Sensor und einer Schaltungsanordnung zur Aufbereitung und/oder Verarbeitung der von dem Fühler abgegebenen Meßsignale, **dadurch gekennzeichnet,** daß
- der Meßfühler eine auf eine seismische Masse einwirkende Kraft erfaßt,
und nach
$$F = m \cdot \alpha$$
proportional der Geschwindigkeit oder Beschleunigung eine elektrische Größe in einem Signalgeber (1) mit Verstärker (2) generiert,
- diese als Analogwert einem Analog/Digital-Wandler (3) und danach
- als digitale Information einem Multiplikator (4) mit Summierer (5) zuführt, die beide ebenso wie der A/D-Wandler (3) mit einer Zeitreferenz (6) verbunden sind, und
- in dem Summierer (5) aufeinanderfolgende Summen (S) der Produkte ($P = X \cdot Y$) aus dem Multiplikator (4) gebildet werden, und
- die so gebildeten Informationen (Bits) an einen Adaptor (7) für die Anpassung der Signale an eine Signalverarbeitung (8) abgegeben werden.

2. Einrichtung nach Anspruch 1, **dadurch gekennzeichnet,** daß der Analog-Eingang (18) der Schaltung zur Signalaufbereitung an eine Spannungsversorgung und eine Zeitreferenz angeschlossen ist, die einen Frequenzgenerator (16) mit Schwingquarz und Frequenzteiler (17) enthält.

3. Einrichtung nach Anspruch 1 oder 2, **dadurch gekennzeichnet,** daß im Multiplikator (4) Summierer (5) von jeweils 'n' nebeneinandeliegenden Multiplikandenstellen, die Produkte aufsummiert und mittels Register inkremental abrufbar sind.

4. Einrichtung nach einem der Ansprüche 1 bis 3, **dadurch gekennzeichnet,** daß der Multiplikator (4) mit Pull-Down-Widerständen belastet ist, die als Summierer (5) dienend, ein Register aufweisen.

5. Einrichtung nach einem der vorhergehenden Ansprüche, **dadurch gekennzeichnet,** daß die Schaltung zur Signalaufbereitung zwei parallele Ausgänge (13, 15) entweder ditital über Code-Adapter (7) an eine Einheit (8) zur Signalweiterverarbeitung oder analog über einen Digital/Analog-Wandler (14) aufweist.

INTEGRATIONS-
STUFE

SIGNALGEBER 1 → VER-STÄRKER 2 — A/D WANDLER 3 — MULTIPLIKATOR 4 — SUMMIERER 5 — CODE ADAPTER 7 ⇒ SIGNALVERARBEITUNG 8

ZEITREFERENZ 6

SIGNALAUFBEREITUNG

FIG. 1

10 420

Taktgenerator 9

Zeitreferenz 6

Analogeingang 18
$U_e$

12 – bit
A/D – Wandlung 3

Analog – OP
100 – fach 2

(Abgleichhilfen)

Lowbyte
Null – Indikator 10

Multiplikator / –
Summierer 4
5

Integrations –
faktor 11

Sperren / Freigabe
Fremdreset
Einschaltreset 20

Überlaufmeldung 12

$\int U_e \times dt$

12 MS – Bits von 24

Codeanpassung 7

Digital –
ausgang 13

12 – bit
D/A – Wandlung
optional 14

$U_a$ 15

FIG. 2

FIG. 3

Frequenz-Generator 16

Frequenz-Teiler 17

zu 3

zu 4

18

OP-Amp

FIG. 4

NULLINDIKATOR 19

10 420

12 BIT D/A-Wandler — 14

OP
Amp

10 V/ Stufe — 15

# FIG. 5

7 →

CODE - ANPASSUNG

# FIG.6

— 13

10 420